# EUROPEAN PATENT SPECIFICATION

(11) **EP 0 987 652 B1**
(45) Date of publication and mention of the grant of the patent: **06.04.2005**
(21) Application number: 99307396.4
(22) Date of filing: 17.09.1999
(51) Int. Cl.: G06K 19/077

(54) **IC card and its manufacturing method**
IC-Karte und Herstellungsverfahren derselben
Carte à puce et méhode de fabrication d'une telle carte

(30) Priority: 18.09.1998 JP 26430798
(43) Date of publication of application: 22.03.2000
(73) Proprietor: Hitachi, Ltd., Chiyoda-ku, Tokyo 101 (JP)
(72) Inventor: Sasaki, Koji, Niihari-gun, Ibaraki-ken (JP); Saito, Naoto, Niihari-gun, Ibaraki-ken (JP); Miura, Hideo, Koshigaya-shi, Saitama-ken (JP); Ohta, Hiroyuki, Tsuchiura-shi, Ibaraki-ken (JP); Matsumoto, Kunio, Koshigaya-shi, Saitama-ken (JP); Yoshino, Ryozo, Hadano-shi, Kanagawa-ken (JP)
(74) Representative: Nicholls, Michael John

(56) References cited:
- EP-A- 0 676 717
- US-A- 5 733 814
- STUBY K P: "Flexible Semiconductor Credit Card. November 1979." IBM TECHNICAL DISCLOSURE BULLETIN, vol. 22, no. 6, 1 November 1979 (1979-11-01), pages 2336-2337, XP002197484 New York, US

## Description

Recently, demand for IC cards (Integrated Circuit cards) is rising in a variety of applications as an electronic approval card, a prepaid card, a periodic ticket and a card for individual certification and so on.

IC cards can have the following features.
1) The memory capacity of the IC card (500 - 16000 characters) is greater than the memory capacity of a conventional magnetic card (about 80 characters).
2) The IC card is harder to forge than the magnetic card.
3) By using the electromagnetic induction phenomenon by radio transmission the nontouch type IC card can be manufactured.

Usually, a card is put in a purse, a card case or carried loose whether it is an IC card or a magnetic card, so the IC card is required to satisfy at least the same specifications as magnetic card, such as the following.
1) The size of the IC card is smaller than the magnetic card.
2) The thickness of the IC card is the same or thinner than the magnetic card.
3) The weight of the IC card is the same or lighter than the magnetic card.
4) The IC card is flexible against bending by external force.

The IC card has the IC chip, therefore, the IC card has a possibility of damage of the IC chip by transformation such as flexing, bending or otherwise distorting the IC card.

The following is important in order to improve the reliability of the IC card against transformation.
1) Structure of the IC card that resists transformation to the IC chip.
2) Structure of the IC chip that even if the IC chip is transformed, the IC chip is not destroyed.

An IC card which limits transformation of the IC chip even if the IC card is transformed is disclosed to Japanese patent Laid-open print No. 64-11895 (prior art 1). Prior art 1 discloses an IC card structure in which the IC chip suppresses transformation by holding and reinforcing the IC chip with a metal plate.

It is important that the IC chip itself should be thin and that defects of the IC chip surface are decreased so that it is hard to destroy it by transformation. In general, the bending transformation of the IC chip and the stress of the IC chip surface are proportional to the thickness of the IC chip.

Generally Silicon (Si) used as a material of the IC chip. Silicon is a brittle material. The IC chip is destroyed by mirror surface defects. So, it is desirable to decrease defects of the chip mirror surface.

A method of preventing destruction by forming the IC chip itself is disclosed in Japanese patent Laid-open print No. 1-235699 (prior art 2). Prior art 2 discloses the manufacturing method of removing micro-cracks on the mirror surface of the IC chip by an etching process.

The Japanese patent Laid-open print No. 4-62921 (prior art 3) uses a plasma etching machine and discloses a removal of the reaction secondary product by two step etching.

The Japanese patent Laid-open print No. 6-232255 (prior art 4) discloses dicing a wafer from the mirror surface of the chip to prevent the chipping that occurs in the mirror surface of the chip.

By the improvement of the manufacturing techniques of the IC circuit, IC chips which are thin and have a small area are advancing in recent years. The thin type and the small area of the IC chip improve the flexibility against transformation of the IC card. But, high precision of the manufacture technique of the IC chip is also required. Despite the IC chip becoming thinner than in the past and despite the removal of micro-cracks in the IC chip by etching before dicing wafer (prior art 2), the strength improvement of the chip is insufficient. The method of dicing of the wafer from the mirror surface of the chip (like prior art 4) cannot suppress the chipping that occurs in the device surface of the chip. Therefore, the IC chip strength is not improved.

The IC chip after dicing is thin, and the area is small. Therefore, it is difficult to selectively etch only the mirror surface of the IC chip by plasma etching, etc. because of the problem of productivity and the transfer. When using isotropical chemical etching, etc., the device surface of the IC chip is eroded by etching. The purpose of the present invention is to provide an IC card which has high reliability against transformation by external force.

EP-A-0,676,717 discloses a method of manufacturing an IC chip for location inside an IC card the external form of which card is formed by laminated base plates which are softer than the IC chip. The method comprises: forming a circuit on a device surface of a wafer; applying a protection tape to said wafer device surface; etching said wafer; dicing said wafer to make several IC chips; and removing said protection tape. The surface of the wafer, and hence of the IC chips, which is etched is the mirror surface located on the opposite side from the device surface. The etching is performed to improve die strength, minimise stress concentration points, and eliminate crack initiation points in the crystal lattice structure. During the dicing, various factors are said to be optimised to reduce the concentration and size of chipping formed in said mirror surface and side surfaces of the IC chip at the circumference of the mirror surface.

According to a first aspect of the present invention, there is provided an IC card comprising:
at least one IC chip; and
base plates which are softer than said IC chip, said base plates being laminated and forming the external form of the IC card, said IC chip being located inside the IC card,
wherein the at least one IC chip comprises:
a device surface where a circuit is formed,
a mirror surface which is located in the opposite side from the device surface, and
side surfaces which are substantially perpendicular to the device surface, and
wherein said mirror surface is etched, whereby sharp regions of grinding flaws formed in said mirror surface are substantially removed and said side surfaces are also etched, whereby sharp regions of chippings formed in the mirror surface and the side surfaces at the circumference of the mirror surface are substantially removed.

According to a second aspect of the present invention, there is provided a method of manufacturing an IC chip for location inside an IC card the external form of which card is formed by laminated base plates which are softer than the IC chip, the method comprising:
forming a circuit on a device surface of a wafer;
applying a protection agent to said device surface of said wafer;
dicing said wafer to make several IC chips;
etching said IC chips made by dicing said wafer so as to etch both a mirror surface of said IC chip, which is located on the opposite side from the device surface, and side surfaces of said IC chip, which are surfaces substantially perpendicular to the device surface, whereby sharp regions of grinding flaws formed in said mirror surface and sharp regions of chippings formed in the mirror surface and the side surfaces at the circumference of the mirror surface are substantially removed; and
removing said protection agent.

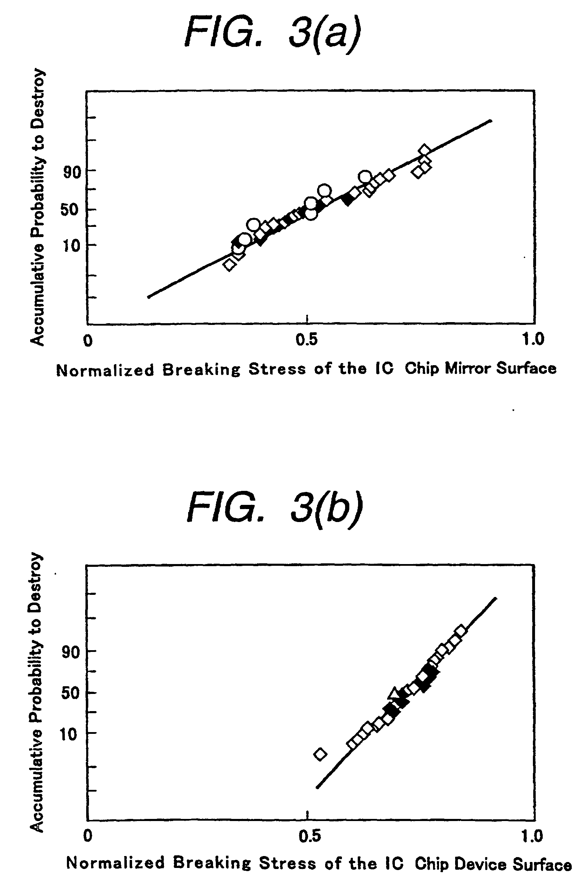

The inventors determined a breaking stress on the mirror surface and the device surface of the IC chip by a 3-point bending test. The test result was analysed by accumulative probability to destroy against breaking stress (Fig. 3). Fig. 3(A) illustrates the breaking stress of the mirror surface of the IC chip. Fig. 3(B) illustrates the breaking stress of the device surface of the IC chip. As is clear from this figure, the breaking stress on the mirror surface of the IC chip is smaller than breaking stress on the device surface of the IC chip and the dispersion of breaking stress also enlarges.

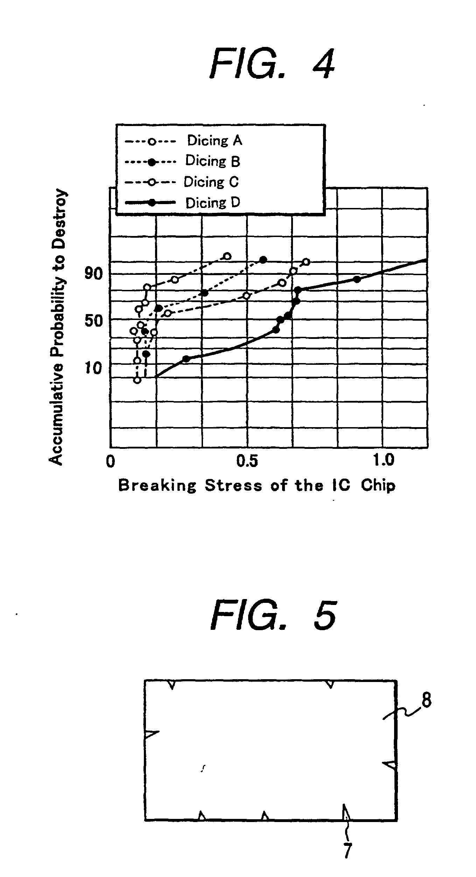

From this, it is thought that the defects exist largely on the mirror surface of the IC chip. The inventors measured the breaking stress on the mirror surface of various IC chips for which the grinding conditions at the time of IC chip manufacturing are the same and dicing conditions are different, by a 3-point bending test. The result is shown in Fig. 4. As it is shown in Fig. 4, dicing conditions (four conditions; Dicing A, Dicing B, Dicing C, Dicing D) also greatly change breaking stress of the IC chip. It is proved that the defect that arises from this dicing in the manufacturing process of the IC chip gives a large influence to the breaking strength of the IC chip.

In Fig. 5, the type of defects on the mirror surface after dicing the IC chip are shown. The circumference part of the chip has many inherent flaws. This is chipping caused on the mirror surface of the IC card by the process of dicing. From this, the destruction strength of the IC chip declines by the chipping that arises on the mirror surface side by dicing of the manufacturing process of the IC chip.

That is, from the inventor's analysis it is found that elimination of the chipping that exists in the circumference part on the mirror surface of the IC chip improves the destruction strength of the IC chip. The process of etching the IC chip is done after dicing to eliminate the chipping that occurs on the mirror surface of the IC chip. But the IC chip that is the present application field of the invention has a thickness 60µm or less. The IC chip, after dicing is very thin and small so it is difficult to handle. Therefore, there is a problem in productivity and the transfer by the method of etching only the mirror surface selectively by plasma etching machine, etc.

When the IC chip is etched by chemical etching, the problem of the above productivity and the transfer does not arise. But a problem has been discovered of eroding the device surface as well as the mirror surface of the IC chip by etching because etching cannot be done selectively.

To allow better understanding the following description is given by way of non-limitative example with reference to the drawings in which:
Fig. 1 is the sectional view of the IC card that is example of the present invention.
Fig. 2(a) to (f) show part of the manufacturing process of the IC chip that is the example of the present invention.
Fig. 3(a) and (b) illustrate relationship found by the inventors between the accumulative probability to destroy and the breaking stress of the IC chip that is used for a conventional IC card.
Fig. 4 illustrates a relationship found by the inventors between accumulative probability to destroy and the breaking stress by dicing condition of the IC chip that is used for a conventional IC card.
Fig. 5 represents the state of the mirror surface after dicing of the IC chip that is used for a conventional IC card as found by the inventors.
Fig. 6 represents the generation mechanism of the chipping in the manufacturing process of the IC chip as analysed by the inventors.
Fig. 7 is the figure that shows the difference between the breaking stresses of the IC chip of the present invention and a conventional IC chip.

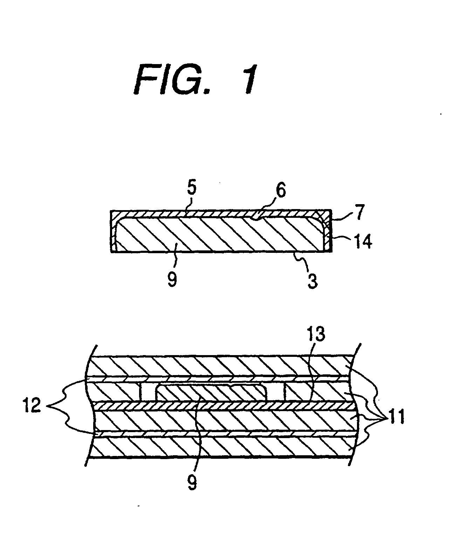

As follows, the example 1 of the present invention is referred to and is explained by using the figure. Fig. 1 is a sectional view of the IC card of this example. The thickness of the IC card of this example is about 0.46mm. Card base material 11 is pasted together by adhesive 12, and IC chip 9 and circuit layer 13 are included. As for IC chip 9, the mirror surface and the side are etched.

Because of excluding the sharpness part of chipping 7 that arises in the IC chip by dicing, the IC chip being strength is enlarged. The advantage that is equal to this example as for the IC card having the thickness about 0.46mm, can be expected for the IC card of thickness 0.76mm or less.

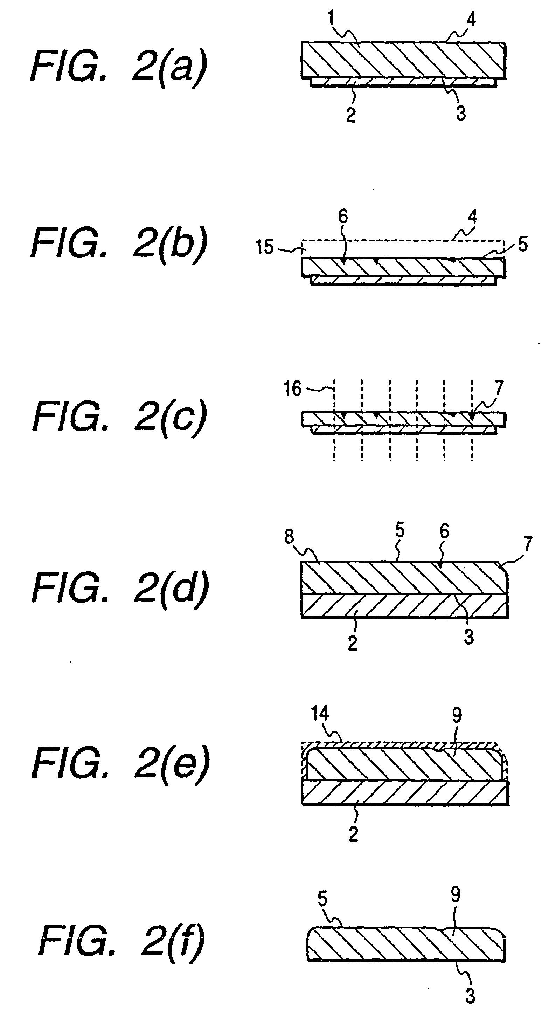

The manufacturing process of IC chip 9 is explained by using Fig. 2. In the manufacturing process of the IC chip, in the process (Fig. 2(a)) of supplying the protection agent after the circuit installation process, a protection agent such as epoxy resin is first applied to surface 3 of the device of wafer 1 before mirror surface grinding and dicing as protection agent 2. The protection agent does not need to be epoxy resin. It has only to be a material that is not eroded in the etching process (Fig. 2(e)) that is done later. For example, heat curable resin, thermoplastic resin, etc. are fine. The purpose of applying the protection agent is that it prevents erosion of the device surface of the IC chip by the etching process (Fig. 2(e)). In this example, the protection agent is applied before mirror surface grinding and dicing and after the circuit installation. It is contemplated to apply the protection agent after mirror surface grinding. The time of the protection agent application is before dicing process, otherwise it is not limited especially.

The mirror surface grinding process (Fig. 2(b)) is done from the side of the previous mirror surface 4 of the wafer. As for the IC card at present, the thickness may be 0.76 - 0.25mm. In order to store the IC chip in the IC card of this thickness, the IC chip needs grinding until the thickness becomes 0.2mm or less. The IC chip stored in the IC card, likewise with the IC card, is bent by force applied from the outside when carrying and using the IC card. Transformation arises and a stress occurs on the surface of the IC chip.

Where the thickness of the IC chip is defined as T, the Young's modulus of the IC chip is defined as E, and radius of curvature of the IC chip is defmed as R. The IC chip bending stress a is represented by the formula σ =ET/(2R).

If the thickness of the IC chip is reduced, the bending stress of the IC chip is reduced for a bending transformation of an IC chip of the same radius of curvature. Therefore, as for the IC chip, it is desirable that it is ground as thin as possible. However, grinding flaws 6 arises in mirror surfaces 5 of wafer 1 at the time of mirror surfaces grinding.

In the IC chip manufactured by a conventional IC chip manufacturing method, there is the possibility that it becomes a significant factor that grinding flaws 6 arising at the time of mirror surface grinding reduce the bending strength of the IC chip. For example, it is desirable to reduce the grinding speed so that the formation grinding flaws 6 on the mirror surface of the IC chip is reduced when the mirror surface of the IC chip is ground. But reduction of the grinding speed increases the time that is needed in the mirror surface grinding in the production process of the IC chip. According to this example, grinding flaws 6 are eliminated in the etching process (Fig. 2(e)). So, grinding flaws 6 that arise at the time of mirror surface grinding can be permitted and it is possible to improve productivity. For example, it is not necessary to reduce the grinding speed in the method of manufacturing the IC chip that is used for the IC card of which the thickness is 0.46mm or more. As for the IC card of which the thickness is 0.46mm or less, it is desirable that conventional methods of reducing grinding flaws are also performed. As a result the IC chip of which the bending strength is high can be manufactured. Manufacturing of the IC card of high reliability is enabled.

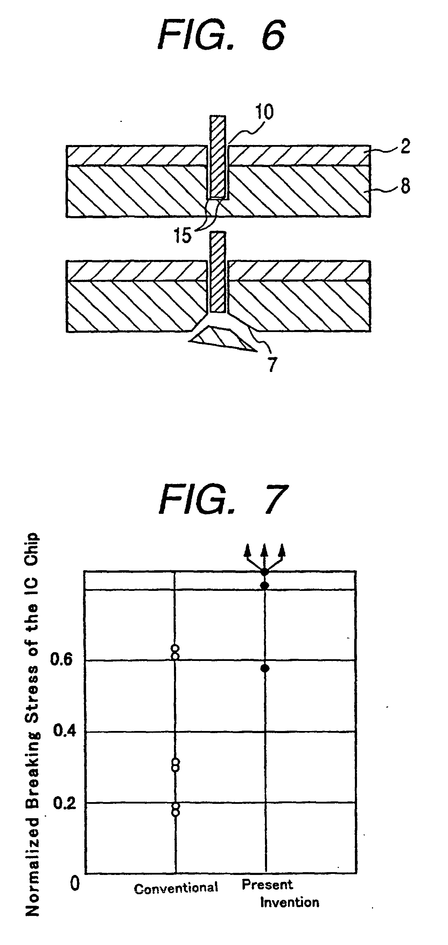

Dicing process (Fig. 2(c)) of the next ground IC chip is done. Dicing uses a blade of 20 µm thickness here. The protection agent also is cut with the wafer by dicing process (Fig. 2(c)). There is a fear of the occurrence of chipping 7 in the circumference part of the IC chip by dicing process (Fig. 2(c)). A chipping generation mechanism is shown in Fig. 6. When blade 10 cuts protection agents 2 and wafer 1, the part of wafer that is not cut destroys the part from which wafer was cut as starting point 15. This destruction is called chipping. It is thought that the vibration that is given to wafer 1 by the rotation of blade 10 is the cause of this.

Fig. 5 shows the chipping that occurs in the IC chip by dicing. Chipping 7 comes to the circumference of the IC chip like a notch. The depth of chipping 7 is generally from 10 µm to more than 100 µm. Chipping 7 can reduce the bending strength of the IC chip. The method of slowing the transmission speed of the blade 10 in order to reduce generation of this chipping as much as possible has been considered. But this method would increase the time that is needed in dicing process. In the method of manufacturing the IC chip in the example of the present invention, coming of the sharp notch of the chipping 7 tip part is removed in the back etching process (Fig. 2(e)). Therefore, chipping 7 that arises at the time of dicing process can be permitted, and it is possible to improve productivity. The chip after dicing consists like of Fig. 2(d). Grinding flaw 6 and chipping 7 arise in mirror surface 5 in IC chip 8 after dicing.

Etching processing (Fig. 2(e)) is done. Etching processing is done by chemical etching by the mixture liquid of fluoric acid, nitric acid and acetic acid. As for IC chip 8, the surface without device surface 3 (mirror surface 5 and side) protected by resisting is processed by this etching. The purpose of etching processing is not to remove all chipping 7 that occurs in mirror surface 5 of IC chip 8 and all grinding flaws 6. The purpose of etching processing is to remove sharp notches coming from the chipping tip part or the grinding flaw tip part that influence declination of the bending strength of the IC chip.

As for the etching quantity, the bending strength improvement of the IC chip has the advantage sufficiently in 10 µm or less. Even if the etching quantity is greatly taken, the problem of erosion of the part does not arise other than the mirror surface of the IC chip. If the etching quantity is increased, the advantage of the bending strength improvement of the chip also increases. After the etching process (Fig. 2(e)), protection agent removal (Fig. 2(f)) is done.

In the process of the protection agent removal, the protection agent applied on device surface 3 of IC chip 9 is eliminated. The protection agent removal is chemically performed by dipping the IC chip in the protection agent removal liquid. While acetone was used as a protection agent removal liquid in this example, the protection agent removal liquid is not limited to this, the protection agent can be removed, and device surface 3 of IC chip 8 has only not be eroded.

Fig. 7 is the result that the bending strength of IC chip 9 of this example is measured. The bending strength of the IC chip is measured by a three point bending test. For the comparison, the result that the bending strength of the IC chip that does not eliminate the chipping that occurs in dicing is shown in Fig. 7. As it is shown in Fig. 7, the bending strength of the IC chip of this example becomes 2 times or more the bending strength of the IC chip manufactured in the conventional method. The method of manufacturing the IC chip by this example provides IC chip that is less easily destroyed.

Accordingly the present invention provides an IC card and its manufacturing method of high reliability for an improved chip breakage to the IC chip.

## Claims

1. An IC card comprising:
at least one IC chip (9) ; and
base plates (11) which are softer than said IC chip (9), said base plates (11) being laminated and forming the external form of the IC card, said IC chip (9) being located inside the IC card,
wherein the at least one IC chip comprises:
a device surface (3) where a circuit is formed,
a mirror surface (5) which is located in the opposite side from the device surface (3), and
side surfaces which are substantially perpendicular to the device surface (3), and
wherein said mirror surface (5) is etched, whereby sharp regions of grinding flaws (6) formed in said mirror surface (5) are substantially removed, and
**characterised in that** said side surfaces are also etched, whereby sharp regions of chippings (7) formed in the mirror surface (5) and the side surfaces at the circumference of the mirror surface (5) are substantially removed.

2. The IC card according to claim 1, wherein said IC chip (9) is made of silicon.

3. The IC card according to claim 1 or 2, wherein a thickness of said IC chip (9) is 0.2mm or less.

4. The IC card according to any one of the preceding claims, wherein the depth of etching from the external form of said IC chip (9) is less than depth of said grinding flaws (6) and said chippings (7) from the external form of said IC chip (4) to the bottom of said grinding flaws (6) and said chippings (7).

5. A method of manufacturingan IC chip (9) for location inside an IC card the external form of which card is formed by laminated base plates (11) which are softer than the IC chip (9), the method comprising:
forming a circuit on a device surface (3) of a wafer (1);
applying a protection agent (2) to said device surface (3) of said wafer (I); and
dicing said wafer (1) to make several IC chips (9);
**characterised by** further comprising:
etching said IC chips (9) made by dicing said wafer (1) so as to etch both a mirror surface (5) of said IC chip (9), which is located on the opposite side from the device surface (3), and side surfaces of said IC chip (9), which are surfaces substantially perpendicular to the device surface (3), whereby sharp regions of grinding flaws (6) formed in said mirror surface (5) and sharp regions of chippings (7) formed in the mirror surface (5) and the side surfaces at the circumference of the mirror surface (5) are substantially removed;
removing said protection agent (2);

6. A method of manufacturing an IC chip according to claim 5, wherein said protection agent (2) is applied to said IC chip (9) before dicing said wafer.

7. A method of manufacturing an IC chip according to claim 5 or 6, wherein said IC chip (9) is etched by chemical etching with a mixture liquid.

8. A method of manufacturing an IC chip according to claim 7, wherein said mixture liquid comprises fluoric acid, nitric acid and acetic acid.

9. A method of manufacturing an IC chip according to any one of claims 5 to 8, wherein the depth of etching from the external form of said IC chip (9) is less than the depth of said grinding flaws (6) and said chippings (7) from the external form of said IC chip (9) to the bottom of said grinding flaws (6) and said chippings.

10. A method of manufacturing an IC card, the method, comprising:
manufacturing an IC chip (9) by a method according to any one of the preceding claims; and
arranging the IC chip (9) inside laminated base plates (11) which are softer than the IC chip (9).

## Patentansprüche

1. IC-Karte, umfassend
wenigstens einen IC-Chip (9) und
Basisplatten (11), die weicher als der IC-Chip (9) sind, wobei die Basisplatten (11) geschichtet sind und die äußere Form der IC-Karte bilden, wobei der IC-Chip (9) innerhalb der IC-Karte angeordnet ist,
wobei der wenigstens eine IC-Chip umfaßt:
eine Geräteoberfläche (3), auf der eine Schaltung ausgebildet ist,
eine Spiegeloberfläche (5), die auf der der Geräteoberfläche (3) gegenüberliegenden Seite angeordnet ist, und
Seitenoberflächen, die im wesentlichen senkrecht zur Geräteoberfläche (3) sind, und
wobei die Spiegeloberfläche (5) geätzt ist, wodurch scharfe Bereiche von in der Spiegeloberfläche (5) geformten Schleiffehlern (6) im wesentlichen beseitigt sind, und
**gekennzeichnet dadurch, daß** die Seitenoberflächen ebenfalls geätzt sind, wodurch scharfe Bereiche von Ausplatzern (7), die in der Spiegeloberfläche (5) und den Seitenoberflächen am Umfangsrand der Spiegeloberfläche (5) gebildet sind, im wesentlichen beseitigt sind.

2. IC-Karte nach Anspruch 1, wobei der IC-Chip (9) aus Silizium hergestellt ist.

3. IC-Karte nach Anspruch 1 oder 2, wobei der IC-Chip (9) 0,2 mm oder weniger dick ist.

4. IC-Karte nach einem der vorhergehenden Ansprüche, wobei die Ätztiefe von der äußeren Form des IC-Chips (9) aus geringer ist als die Tiefe der Schleiffehler (6) und der Ausplatzer (7) von der äußeren Form des IC-Chips (4) aus bis zum unteren Ende der Schleiffehler (6) und der Ausplatzer (7).

5. Verfahren zum Herstellen eines IC-Chips (9) zum Anordnen innerhalb einer IC-Karte, deren äußere Form durch geschichtete Basisplatten (11) gebildet ist, die weicher als der IC-Chip (9) sind, wobei das Verfahren die folgenden Schritte umfaßt:
Ausbilden einer Schaltung auf einer Geräteoberfläche (3) eines Wafers (1),
Anwenden eines Schutzmittels (2) auf die Geräteoberfläche (3) des Wafers (1), und
Dicen des Wafers (1), um einige IC-Chips (9) herzustellen,
**gekennzeichnet durch** die folgenden Schritte:
Ätzen des **durch** Dicen des Wafers (1) hergestellten IC-Chips (9), um sowohl eine Spiegeloberfläche (5) des IC-Chips (9), die auf der der Geräteoberfläche (3) gegenüberliegenden Seite angeordnet ist, als auch Seitenoberflächen des IC-Chips (9), die zur Geräteoberfläche (3) im wesentlichen senkrechte Oberflächen darstellen, zu ätzen, wodurch scharfe Bereiche von auf der Spiegeloberfläche (5) geformten Schleiffehlern (6) und scharfe Bereiche von in der Spiegeloberfläche (5) und den Seitenoberflächen am Umfangsrand der Spiegeloberfläche (5) geformten Ausplatzern (7) im wesentlichen beseitigt werden,
Entfernen des Schutzmittels (2).

6. Verfahren zum Herstellen eines IC-Chips nach Anspruch 5, wobei das Schutzmittel (2) auf den IC-Chip (9) vor dem Dicen des Wafers angewendet wird.

7. Verfahren zum Herstellen eines IC-Chips nach Anspruch 5 oder 6, wobei der IC-Chip (9) durch chemisches Ätzen mit einer Mischflüssigkeit geätzt wird.

8. Verfahren zum Herstellen eines IC-Chips nach Anspruch 7, wobei die Mischflüssigkeit Fluorsäure, Stickstoffsäure und Essigsäure umfaßt.

9. Verfahren zum Herstellen eines (IC-Chips nach einem der Ansprüche 5 bis 8, wobei die Ätztiefe von der äußeren Form der IC-Karte (9) aus geringer ist als die Tiefe der Schleiffehler (6) und der Ausplatzer (7) von der äußeren Form des IC-Chips (9) aus bis zum unteren Ende der Schleiffehler (6) und der Ausplatzer.

10. Verfahren zum Herstellen einer IC-Karte, umfassend die folgenden Schritte:
Herstellen eines IC-Chips (9) mittels eines Verfahrens nach einem der vorhergehenden Ansprüche, und
Anbringen des IC-Chips (9) innerhalb der geschichteten Basisplatten (11), die weicher als der IC-Chip (9) sind.

## Revendications

1. Carte à puce comprenant :
au moins une puce à circuit intégré (9) ; et
des plaques de base (11) qui sont plus souples que ladite puce à circuit intégré (9), lesdites plaques de base (11) étant stratifiées et réalisant la forme externe de la carte à puce, ladite puce à circuit intégré (9) étant située à l'intérieur de la carte à puce,
dans laquelle ladite au moins une puce à circuit intégré comprend :
une surface de dispositif (3) où un circuit est formé,
une surface miroir (5) qui est située du côté opposé à la surface de dispositif (3), et
des surfaces latérales qui sont sensiblement perpendiculaires à la surface de dispositif (3), et
dans laquelle ladite surface miroir (5) est gravée, moyennant quoi des régions tranchantes de défauts de meulage (6) formés dans ladite surface miroir (5) sont sensiblement retirées, et
**caractérisée en ce que** lesdites surfaces latérales sont également gravées, moyennant quoi des régions tranchantes d'éclats (7) formés dans la surface miroir (5) et dans les surfaces latérales au niveau de la circonférence de la surface miroir (5) sont sensiblement retirées.

2. Carte à puce selon la revendication 1, dans laquelle ladite puce à circuit intégré (9) est réalisée en silicium.

3. Carte à puce selon la revendication 1 ou 2, dans laquelle une épaisseur de ladite puce à circuit intégré (9) est de 0,2 mm ou moins.

4. Carte à puce selon l'une quelconque des revendications précédentes, dans laquelle la profondeur de gravure par rapport à la forme externe de ladite puce à circuit intégré (9) est inférieure à la profondeur desdits défauts de meulage (6) et desdits éclats (7) de la forme externe de ladite puce à circuit intégré (9) jusqu'au fond desdits défauts de meulage (6) et desdits éclats (7).

5. Procédé de fabrication d'une puce à circuit intégré (9) destiné à être positionnée à l'intérieur d'une carte à puce, la forme externe de la carte étant réalisée par des plaques de base (11) stratifiées qui sont plus souples que la puce à circuit intégré (9), le procédé comprenant:
la formation d'un circuit sur une surface de dispositif (3) d'une tranche (1) ;
l'application d'un agent de protection (2) à ladite surface de dispositif (3) de ladite tranche (1) ; et
le découpage en dés de ladite tranche (1) afin de réaliser plusieurs puces à circuit intégré (9) ;
**caractérisé en ce qu'**il comprend en outre :
la gravure desdites puces à circuit intégré (9) réalisées par le découpage en dés de ladite tranche (1) de manière à graver à la fois une surface miroir (5) de ladite puce à circuit intégré (9), qui est située du côté opposé à la surface de dispositif (3), et des surfaces latérales de ladite puce à circuit intégré (9), qui sont des surfaces sensiblement perpendiculaires à la surface de dispositif (3), moyennant quoi des régions tranchantes de défauts de meulage (6) formés dans ladite surface miroir (5) et des régions tranchantes d'éclats (7) formés dans la surface miroir (5) et les surfaces latérales au niveau de la circonférence de la surface miroir (5) sont sensiblement retirées ;
le retrait dudit agent de protection (2).

6. Procédé de fabrication d'une puce à circuit intégré selon la revendication 5, dans lequel ledit agent de protection (2) est appliqué à ladite puce à circuit intégré (9) avant le découpage en dés de ladite tranche.

7. Procédé de fabrication d'une puce à circuit intégré selon la revendication 5 ou 6, dans lequel ladite puce à circuit intégré (9) est gravée par gravure chimique au moyen d'un mélange liquide.

8. Procédé de fabrication d'une puce à circuit intégré selon la revendication 7, dans lequel ledit mélange liquide comprend de l'acide fluorhydrique, de l'acide nitrique et de l'acide acétique.

9. Procédé de fabrication d'une puce à circuit intégré selon l'une quelconque des revendications 5 à 8, dans lequel la profondeur de gravure par rapport à la forme externe de ladite puce à circuit intégré (9) est inférieure à la profondeur desdits défauts de meulage (6) et desdits éclats (7) de la forme externe de ladite puce à circuit intégré (9) jusqu'au fond desdits défauts de meulage (6) et desdits éclats.

10. Procédé de fabrication d'une carte à puce, le procédé comprenant:
la fabrication d'une puce à circuit intégré (9) par un procédé selon l'une quelconque des revendications précédentes ; et
la mise en place de la puce à circuit intégré (9) à l'intérieur de plaques de base (11) stratifiées qui sont plus souples que la puce à circuit intégré (9).
